Europäisches Patentamt

European Patent Office

Office européen des brevets

(19)

(11) Veröffentlichungsnummer: **0 298 294**
**B1**

(12) **EUROPÄISCHE PATENTSCHRIFT**

(45) Veröffentlichungstag der Patentschrift:
07.11.90

(51) Int. Cl.⁵: **B65G 57/14**

(21) Anmeldenummer: 88109821.4

(22) Anmeldetag: 21.06.88

(54) Vorrichtung zum Gruppieren von Packungen.

(30) Priorität: 01.07.87 DE 8709053 U

(43) Veröffentlichungstag der Anmeldung:
11.01.89 Patentblatt 89/2

(45) Bekanntmachung des Hinweises auf die Patenterteilung:
07.11.90 Patentblatt 90/45

(84) Benannte Vertragsstaaten:
AT BE CH DE ES FR GB GR IT LI LU NL SE

(56) Entgegenhaltungen:
GB-A- 2 173 758
US-A- 3 915 317

PATENT ABSTRACTS OF JAPAN, Band 10,
Nr. 211 (M-501)[2267], 24. Juli 1986; &
JP-A-61 51 418 (TOPPAN PRINTING CO.,
LTD) 13-03-1986
PATENT ABSTRACTS OF JAPAN, Band 10,
Nr. 33 (M-452)[2090], 8. Februar 1986; &
JP-A-60 188 205 (CANON K.K.) 25-09-1985

(73) Patentinhaber: KVM Kontroll- und
Verpackungsmaschinen GmbH & Co. KG, Im Steinernen
Kreuz 31, D-7131 Wurmberg(DE)

(72) Erfinder: Fritz, Günther, Glasbronnenstrasse 12,
D-7131 Neubärental(DE)

(74) Vertreter: Frank, Gerhard, Dipl.-Phys., Patentanwälte Dr.
F. Mayer & G. Frank Westliche 24, D-7530 Pforzheim(DE)

ACTORUM AG

## Beschreibung

Die Erfindung betrifft eine Gruppierungsvorrichtung für die Verpackungstechnik, mit einer vertikalen, aus zwei parallel laufenden Bändern mit Auflageeinrichtungen gebildeten Fördereinrichtung, mit einem Abschieber zur Bildung der Gruppen und mit einem horizontalen Ausgangsband zur Weiterförderung der Gruppen.

Eine derartige Gruppierungsvorrichtung ist aus der Veröffentlichung "Patent Abstracts of Japan, Band 10, Nr. 211" und der zugehörigen JP-A 6 151 418 bekannt.

Die dort gezeigte Gruppierungsvorrichtung dient zur Gruppierung von bogenförmigen Materialien; die Auflageeinrichtungen der parallel, vertikal laufenden Bänder bestehen aus rippenförmigen Gliedern, die in vorgegebenem Abstand auf den gegenüberliegenden Seiten der beiden Bänder befestigt sind und zur Aufnahme von jeweils einem Stapel dienen, der am oberen Ende des Vertikalförderers von einem Abschieber auf die jeweils in gleicher Höhe befindlichen, gegenüberliegenden Rippen geschoben wird. Diese Gruppierungsvorrichtung arbeitet diskontinuierlich: Während der auf der Eingabeseite angeordnete Abschieber einen gebildeten Stapel zwischen die beiden Bänder des Vertikalförderers einschiebt, wird das horizontale Ausgangsband betätigt, um einen dort angekommenen Stapel aus dem Bereich der Vertikalbänder weiterzufördern.

Die Zwischenschaltung des Abschiebers zwischen einem Aufgabeband und dem Vertikalförderer und die dadurch bedingte diskontinuierliche Arbeitsweise dieser Gruppierungsvorrichtung haben zur Folge, daß die Arbeitsgeschwindigkeit dieser Gruppierungsvorrichtung nur gering ist, zumal der Vertikalförderer bei dieser Gruppierungsvorrichtung keine Gruppierungsfunktion hat. Darüber hinaus sind relativ aufwendige Steuervorrichtungen erforderlich, um den Vertikalförderer anzuhalten bzw. wieder in Bewegung zu setzen in Abhängigkeit von der "Gruppierungsgeschwindigkeit" des Abschiebers einerseits und der Fördergeschwindigkeit des Abgabebandes andererseits.

Zur schnellen Gruppierung, insbesondere von Verpackungen, ist diese vorbekannte Gruppierungsvorrichtung daher nicht geeignet.

Aus der GB-A 2 173 758 ist ein Vertikalförderer bekannt, der ebenfalls aus zwei vertikal laufenden parallelen Endlosbändern aufgebaut ist, die auf ihrer Außenseite einen elastischen Belag, insbesondere auch aus nachgiebigen Bürsten aufweisen.

Die oben erwähnten Schwierigkeiten bezüglich einer hohen Gruppierungsgeschwindigkeit treten hier nicht auf, da hier eine Gruppierung der vom Aufgabeband zugeführten Verpackungen nicht vorgenommen wird, die gesamte Anordnung hat folglich überhaupt keine Gruppierungsfunktion und kann dementsprechend kontinuierlich arbeiten, wobei die Fördergeschwindigkeit durch Gruppierungsprobleme dementsprechend nach oben hin nicht begrenzt ist.

Der Einsatz eines aus der GB-A 2 173 758 bekannten "Bürstenbelages" bei der gattungsgemäßen Gruppierungsvorrichtung hätte keinen Einfluß auf die oben beschriebenen grundsätzlichen Nachteile, da die Arbeitsgeschwindigkeit der vorbekannten Gruppierungsvorrichtung durch eine derartige Modifizierung des Vertikalförderers naturgemäß nicht erhöht würde.

Verkaufspackungen, beispielsweise mit der entsprechenden Ware gefüllte, quaderförmige Kartonpackungen (beispielsweise wie in der GB-A 2 173 758 dargestellt) sind auch deswegen mit der Gruppierungsvorrichtung gemäß der erstgenannten Druckschrift technisch nicht sinnvoll gruppierbar, da hierdurch eine weitere Verlangsamung des Gruppierungsprozesses erreicht würde.

Andererseits ist eine solche Gruppierung insbesondere von quaderförmigen Kartonpackungen oftmals vom Hersteller der Ware zum Versand und zur späteren Lagerung in Packungsgruppen zusammenzufassen, damit dann deren Zusammenhalt mit geeigneten zusätzlichen Verpackungsmitteln sichergestellt wird, beispielsweise durch manschettenartige Pappbanderolen oder Überzüge aus Schrumpffolie.

Aufgabe der Erfindung ist es daher, insbesondere für solche quaderförmige Packungen die vorbekannte Gruppierungsvorrichtung so weiterzubilden, daß eine wesentliche Erhöhung der Fördergeschwindigkeit und somit eine Erhöhung der Anzahl der pro Zeiteinheit gruppierbaren Packungen erreicht werden kann.

Erfindungsgemäß wird diese Aufgabe gemäß dem kennzeichnenden Teil des Patentanspruchs gelöst.

Im Unterschied zur gattungsgemäßen Lösung ist insbesondere durch die ausgangsseitig vorgesehene Anordnung des Abschiebers mit dessen waagrecht ausgebildetem Oberteil ein kontinuierlicher Betrieb der Gruppierungsvorrichtung möglich, da die Funktion des Abschiebers auf das Ausgabeband nicht zu einer Unterbrechung der Funktion des Vertikalförderers führt; der Abschieber wirkt daher funktionell als Pufferstation oder auch als Übergangsstation vom Bereich der kontinuierlichen Packungszuführung einerseits zum Bereich der zwangsläufig diskontinuierlichen Abgabe der Packungsgruppen auf dem Ausgangsband.

Ein Ausführungsbeispiel der erfindungsgemäßen Vorrichtung wird nun anhand von Zeichnungen näher erläutert, es zeigen:

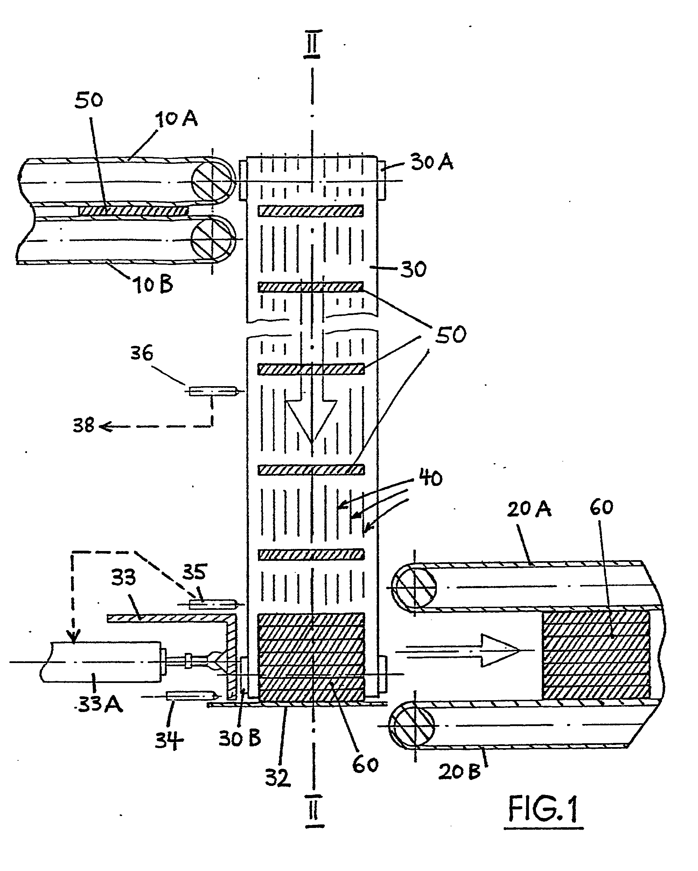

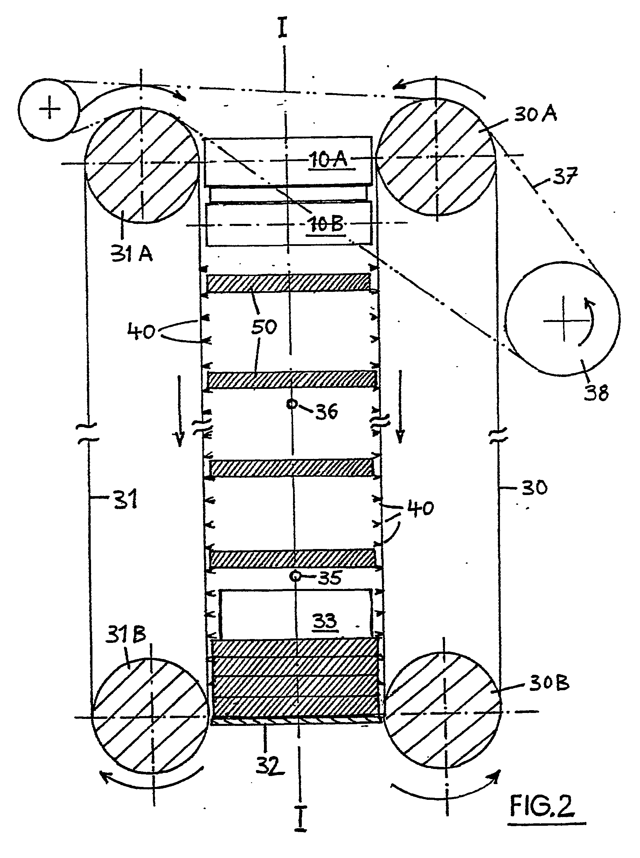

Figur 1: Einen Längsschnitt durch die Fördereinrichtung in der Ebene I-I der Figur 2,
Figur 2: einen Querschnitt durch die Fördereinrichtung in der Ebene II-II der Figur 1, und
Figur 3: eine Detaildarstellung eines Ausschnittes aus einem Bürstenband mit einer von den Bürsten gehaltenen Packung.

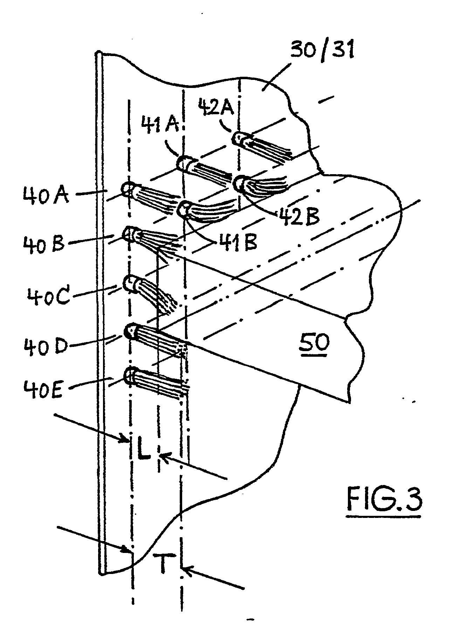

Die vertikale Fördereinrichtung besteht aus zwei parallel zueinander umlaufenden Bürstenbändern 30,31, zwischen denen ein Förderschacht gebildet wird, in dem die Packungen 50 von Bürstenreihen 40 gehalten und nach unten transportiert werden. Der Förderschacht wird jeweils von dem zum anderen Bürstenband zeigenden Trumm gebildet und die Bürsten 40 sind so angeordnet, daß sie im Bereich des Förderschachtes zueinander zeigen. Die Bürstenbänder 30,31 sind an ihren oberen und unteren Enden über entsprechende Walzen 30A,30B bzw. 31A,31B geführt, die über geeignete, nicht näher dargestellte Walzen oder Umlenkrollen mittels einer Antriebskette 37 von einem Motor 38 synchron angetrieben werden, derart, daß ihre Umlaufgeschwindigkeit identisch ist. Auf ihrer Außenseite weisen die Bürstenbänder 30,31 in Reihen und Spalten äquidistant angeordnete Bürsten 40A,...40E bzw. 41A...42A...usw. auf, wie dies in Figur 3 dargestellt ist. Der Abstand der beiden Bürstenbänder ist dabei justierbar, derart, daß der seitliche Abstand L der zu fördernden Packungen 50 so viel kleiner ist, als die Länge T der Bürsten, daß die Eigenelastizität bzw. Haltekraft einer Bürstenreihe (in Figur 3 der Bürstenreihe 40D,41D,42D....) ausreicht, um zusammen mit der gegenüberliegenden Bürstenreihe das Gewicht der Packung 50 aufzunehmen. Andererseits sind die Bürsten elastisch genug, daß die im Zwischenraum L zwischen einer Packung 50 und dem Bürstenband 30/31 "eingeklemmten" Bürsten (in Figur 3 die Reihen B und C) seitlich ausweichen können. Die Bürstenreihe D in Figur 3 bildet also in ihrer Gesamtheit praktisch einen Tragboden für die Packung 50, wogegen die seitlich weggedrückten Bürstenreihen B und C einen gewissen Zentrierungseffekt ausüben, daß der Abstand L der Packung 50 von den beiden seitlichen Bürstenbändern etwa gleich gehalten wird.

Am oberen Ende der Bürstenbänder 30,31 ist ein oberes Aufgabeband 10A und ein unteres Aufgabeband 10b angeordnet, zwischen denen die Packungen 50 den Bürstenförderern horizontal mit großer Geschwindigkeit zugeführt werden können, wobei an der den Aufgabebändern 10A,10B gegenüberliegenden Stirnseite des von den Bürstenbändern gebildeten Schachtes geeignete (nicht dargestellte) Anschlagvorrichtungen vorgesehen sein können, um die Packungen 50 in eine definierte Horizontalposition zu bringen. Am unteren Ende der beiden Bürstenbänder 30,31 befindet sich eine Bodenplatte 32, die auf gleicher Höhe liegt wie ein unteres Ausgangsband 20B, das zum Abtransport der aus einer bestimmten Anzahl von Packungen 50 gebildeten Packungsgruppe 60 dient. Ein oberes Ausgangsband 20A, das in der Höhe verstellbar ist, übergreift die abtransportierten Packungsgruppen 60 und hält den Verband dieser Packungsgruppen aufrecht, bis die oben erwähnten zusätzlichen Verpackungseinrichtungen, beispielsweise zum Umschlagen einer Banderole, den Zusammenhalt der jeweiligen Packungsgruppen sichern.

Auf der den beiden Ausgangsbändern 20A,20B gegenüberliegenden Seite der Bürstenbänder 30,31 ist ein Abschieber 33 angeordnet, der von einem Antriebsaggregat 33A, beispielsweise einem Hydraulik- oder Pneumatikzylinder, in den unteren Bereich des von den Bürstenbändern gebildeten Schachtes horizontal einschiebbar ist und zwar so weit, daß die gebildeten Packungsgruppen 60 von den beiden nachgeschalteten Ausgangsbändern 20A,20B erfaßt und weitergezogen werden.

Zur Steuerung der einzelnen Abläufe sind Lichtschranken vorgesehen, eine unmittelbar über der Bodenplatte 32 angeordnete Lichtschranke 34 überprüft, ob eine Packung 50 auf der Bodenplatte 32 aufliegt, eine weitere, höhenverstellbare Lichtschranke 35 überprüft, ob die gewünschte Stapelhöhe und damit die gewünschte Anzahl der eine Packungsgruppe 60 bildenden Packungen 50 erreicht ist und steuert das Antriebsaggregat 33a des Abschiebers 33.

Schließlich ist auf etwa mittlerer Höhe der beiden Bürstenbänder eine weitere Lichtschranke 36 vorgesehen, die im Falle eines Störungsfalles, insbesondere eines Packungsstaus in dem Förderschacht den Motor 38 (und gegebenenfalls den Antrieb der Aufgabeförderbänder 10A,10B) stoppt.

Die beschriebene Vorrichtung arbeitet wie folgt:

Die von den Aufgabebändern 10A,10B nacheinander geförderten Packungen 5o werden in den Eingangsbereich des von den Bürstenbändern 30,31 gebildeten Schachtes "eingeschossen" wo sie, wie oben beschrieben, auf einer der umlaufenden, horizontalen Bürstenreihen zu liegen kommen und im Schacht nach unten befördert werden. Dort werden sie nacheinander auf der Bodenplatte 32 abgesetzt, bis die gewünschte Stapelhöhe und damit die gewünschte Anzahl der eine Packungsgruppe 60 bildenden Packungen 50 erreicht ist. Die auf diese Höhe eingestellte Lichtschranke 35 meldet dies dem Antriebsaggregat 33A des Abschiebers 30, worauf dieser in den Schacht ausfährt und die gebildete Packungsgruppe 60 auf das Ausgangsband 20B schiebt.

Um zu verhindern, daß die Förderung so lange unterbrochen werden muss, bis der Abschieber 33 wieder in seine ursprüngliche Position zurückgefahren ist, wird der waagerecht ausgebildete obere Teil des Abschiebers 33 als "Zwischenbodenplatte" zur "Zwischenlagerung" der von oben geförderten Packungen 50 benutzt, die dann sozusagen vorgruppiert auf die Bodenplatte 32 gemeinsam abgesetzt werden, wenn der Abschieber 33 wieder zurückgefahren ist.

## Patentansprüche

Gruppierungsvorrichtung für die Verpackungstechnik mit einer vertikalen, aus zwei parallel laufenden Bändern mit Auflageeinrichtungen gebildeten Fördereinrichtung, mit einem Abschieber zur Bildung der Gruppen und mit einem horizontalen Aufgabeband und einem horizontalen Abgabeband zur Weiterförderung der Gruppen, dadurch gekennzeichnet, daß die Auflageeinrichtungen der Bänder (30, 31) aus parallel verlaufenden Bürstenreihen (40A, B, C, D...) gebildet sind, die die einlaufenden Packungen (50) untergreifen und tragen, daß am unteren Ende der beiden Bürstenbänder (30, 31) eine Bodenplatte (32) angeordnet ist, die auf gleiche Höhe mit dem unteren Ausgangsband (20B) angebracht ist und unmittelbar vor diesem endet, auf der die von den Bürstenreihen (40A, B, C, D...) geförderten Packungen (50) gestapelt werden, bis sie eine Packungsgruppe (60) bilden, daß ein parallel zur Ebene der Bodenplatte (32) arbeitender Abschieber (33) zwischen den beiden Bürstenbändern (30, 31) durchschiebbar ist, dessen waagerecht ausgebildetes Oberteil zur Zwischenlagerung und Vorgruppierung der von der vertikalen Fördereinrichtung zugelieferten Packungen dient, wenn der Abschieber (33) eine Packungsgruppe (60) auf das horizontale Ausgangsband (20B) übergibt, und daß in einer vorgegebenen Höhe oberhalb der Bodenplatte (32), die der gewünschten Höhe einer Packungsgruppe (60) entspricht, eine Lichtschranke (35) angeordnet ist, die das Antriebsaggregat (33A) des Abschiebers (33) steuert.

## Claims

Grouping apparatus for packaging technology, comprising a vertical conveyor means, which is formed from two parallel moving belts provided with supporting means, a deflector for forming the groups, and a horizontal feed belt and a horizontal discharge belt for the further conveyance of the groups, characterised in that the supporting means of the belts (30, 31) are formed from parallel moving lines of brushes (40A, B, C, D...), which engage beneath and support the incoming packages (50), a base plate (32) is disposed at the lower end of the two brush belts (30, 31), said base plate being mounted on a level with the lower discharge belt (20B) and terminating immediately in front of said belt, the packages (50) are conveyed by the lines of brushes (40A, B, C, D...) and are stacked on said base plate until they form a package group (60), a deflector (33) operates parallel to the plane of the base plate (32) and is insertable between the two brush belts (30, 31), the horizontally extending upper portion of said deflector being used for the intermediate positioning and preliminary grouping of the packages, which have been delivered by the vertical conveyor means when the deflector (33) transfers a package group (60) to the horizontal discharge belt (20B), and a light barrier (35) controls the drive unit (33A) of the deflector (33) and is disposed at a prescribed height above the base plate (32), which height corresponds to the desired height of a package group (60).

## Revendications

Dispositif de groupage pour la technique d'emballage, équipé d'un transporteur vertical formé de deux bandes circulant parallèlement et comportant des équipements d'appui, d'un organe d'expulsion pour former les groupes ainsi que d'une bande horizontale d'amenée et d'une bande horizontale de sortie destinée au transport ultérieur des groupes, caractérisé en ce que les équipements d'appui sur les bandes (30, 31) sont formés de rangées de balais (40A, B, C, D,....) s'étendant parallèlement qui s'engagent sous les paquets amenés (50) et les portent, en ce qu'à l'extrémité inférieure des deux bandes à balais (30, 31) est montée une plaque de base (32) qui est disposée à la même hauteur que la bande de sortie inférieure (20B) et se termine immédiatement devant celle-ci et sur laquelles les paquets (50) transportés par les rangées de balais (40A, B, C, D,...) sont empilés jusqu'à ce qu'ils forment un groupe de paquets (60), en ce qu'entre les deux bandes à balais (30, 31) peut passer, en glissant, un organe d'expulsion (33) travaillant parallèlement au plan de la plaque de base (32) et dont la partie supérieure horizontale sert au stockage intermédiaire et au groupage préalable des paquets amenés au transporteur vertical, lorsque l'organe d'expulsion (33) fait passer un groupe de paquets (60) sur la bande de sortie horizontale (20B) et en ce qu'à une hauteur préétablie au-dessus de la plaque de base (32), qui correspond à la hauteur désirée d'un groupe de paquets (60), est disposé un barrage photoélectrique (35) qui commande le mécanisme d'entraînement (33A) de l'organe d'expulsion (33).

EP 0 298 294 B1

FIG.1

FIG.2

FIG.3